(19)

Europäisches
Patentamt
European
Patent Office
Office européen
des brevets

(11) **EP 2 366 332 A1**

(12) **EUROPEAN PATENT APPLICATION**

(43) Date of publication:
**21.09.2011 Bulletin 2011/38**

(51) Int Cl.:
**A61B 6/00** *(2006.01)*  **G06T 7/00** *(2006.01)*

(21) Application number: **11157647.6**

(22) Date of filing: **10.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.03.2010 JP 2010063966**

(71) Applicant: **Fujifilm Corporation
Minato-ku
Tokyo (JP)**

(72) Inventor: **Morita, Junya
Kanagawa (JP)**

(74) Representative: **Klunker . Schmitt-Nilson . Hirsch
Patentanwälte
Destouchesstrasse 68
80796 München (DE)**

(54) **Method, apparatus, and program for detecting abnormal patterns in a mammogram**

(57)     Mammary gland content rates are employed to detect abnormal patterns. A mammary gland content rate $r(x, y)$ is calculated for each pixel of a mammogram P obtained by a radiation imaging apparatus (2). Thereafter, an average value $r_{ave}$ of the mammary gland content rates within a breast region MR is calculated, using the mammary gland content rates $r(x, y)$ of each pixel. Abnormal pixels AP that constitute abnormal patterns are detected, employing the mammary gland content rates $r(x, y)$, the average value $r_{ave}$, and a set reference value $R_{ref}$.

FIG.9

**Description**

Background of the Invention

Field of the Invention

The present invention is related to a method, an apparatus, and a program for automatically detecting abnormal regions within breast regions, based on mammograms.

Description of the Related Art

Conventionally, diagnosis of breast cancer, mastopathy, and the like is being performed based on mammograms obtained by radiation imaging. Recently, CAD (Computer Aided Diagnosis) systems that automatically analyze mammograms to aid discrimination of abnormal patterns are being developed. There are known methods that detect candidates for abnormal patterns based on densities within breast regions, and that automatically detect abnormal patterns, based on the characteristic shapes of abnormal patterns.

Further, calculating the amount of mammary gland content in mammograms imaged by mammography apparatuses (content rates) has been proposed. Performing various processes, such as changing radiation imaging conditions, setting image processing conditions, checking image quality, and discriminating the type of breast based on the calculated amount of mammary gland content has also been proposed (refer to Japanese Unexamined Patent Publication Nos. 2005-065855 and 2001-238868, for example). In addition, calculating the mammary gland content rate for each pixel within mammograms has also been proposed (refer to T. Amano et al., "Measurement of Glandular Dose Using Digital Mammogram", Medical Imaging and Information Sciences, Vol. 24, No. 1, pp. 6-12, 2007, for example).

Conventionally, detecting abnormal patterns from mammary gland content rates calculated for each pixel has not been considered, and the aforementioned calculation of mammary gland content rates and the detection of abnormal patterns are being performed separately. Methods that employ pixel values to detect abnormal patterns are affected by the thicknesses of breasts, imaging conditions, etc., and there are cases in which abnormal patterns cannot be accurately detected. Accordingly, it is desirable to employ values that do not depend on thicknesses of breasts and imaging conditions during detection of abnormal patterns.

SUMMARY OF THE INVENTION

The present invention has been developed in view of the foregoing circumstances. It is an object of the present invention to provide a method, an apparatus, and a program for detecting abnormal patterns that employ mammary gland content rates, which are not dependent on the thicknesses of breasts or imaging conditions.

An abnormal pattern detecting apparatus of the present invention detects abnormal patterns from within a mammogram obtained by radiation imaging performed by a radiation imaging apparatus, and is characterized by comprising:

region detecting means, for detecting a breast region from within the mammogram;
mammary gland content rate calculating means, for calculating a mammary gland content rate for each pixel of the breast region detected by the region detecting means; and
judging means, for judging whether each of the pixels represents an abnormal pattern, using the mammary gland content rates calculated by the mammary gland content rate calculating means.

An abnormal pattern detecting method of the present invention detects abnormal patterns from within a mammogram obtained by radiation imaging performed by a radiation imaging apparatus, and is characterized by comprising:

detecting a breast region from within the mammogram;
calculating a mammary gland content rate for each pixel of the detected breast region; and
judging whether each of the pixels represents an abnormal pattern, using the calculated mammary gland content rates.

An abnormal pattern detecting program of the present invention detects abnormal patterns from within a mammogram obtained by radiation imaging performed by a radiation imaging apparatus stored therein, and is characterized by causing a computer to execute the procedures of:

detecting a breast region from within the mammogram;

calculating a mammary gland content rate for each pixel of the detected breast region; and
judging whether each of the pixels represents an abnormal pattern, using the calculated mammary gland content rates.

Here, abnormal patterns refer to patterns that indicate possibilities of disease, such as tumors and calcifications. Abnormal pixels are pixels that constitute the abnormal patterns.
Note that the judging means may comprise:

average value calculating means, for calculating the average value of the mammary gland content rates calculated by the mammary gland content rate calculating means; and
abnormality judging means, for judging whether each of the pixels represents an abnormal pattern, employing the average value calculated by the average value calculating means, the mammary gland content rate, and a set reference value, which is set in advance. Particularly, the abnormality judging means may judge pixels in which the difference between the mammary gland content rate and the average value is greater than the set reference value as abnormal pixels.

Further, the average value calculating means may function to calculate a normal average value, which is an average value of the mammary gland content rates of a plurality of pixels judged to be normal by the abnormality judging means; and
the abnormality judging means may further judge whether the plurality of pixels which have been judged to be normal represent abnormal patterns, employing the normal average value, the mammary gland content rate, and a set reference value, which is set in advance. The calculation of the normal average value by the average value calculating means and the judgments by the abnormality judging means may be repeated until no pixels which are judged to represent abnormal patterns remain.
In addition, the mammary gland content rate calculating means may employ any method to calculate the mammary gland content rates. For example, mammary gland content rates corresponding to pixel values may be stored in advance, and the mammary gland content rates may be calculated based on pixel values. Alternatively, the mammary gland content rate calculating means 20 may obtain a pixel value $I_0$ of a region at which radiation did not pass through the breast but was directly irradiated onto a radiation detector, calculate a pixel value A(x, y) for pixels (x, y) at which only fat tissue has been imaged by radiation imaging, and calculate the mammary gland content rate r(x, y) from pixel values I(x, y) based on a ratio $\mu$ of an average attenuation coefficient between fat and mammary glands, which is stored in advance, according to Formula (1) below

$$r(x, y) = \frac{A(x, y) - I(x, y)}{I_0 - A(x, y)} \times \frac{1}{\mu - 1}$$   Formula (1).

The abnormal pattern detecting apparatus may further comprise image processing condition setting means, for setting image processing conditions based on detected abnormal pixels, or imaging pass/fail judging means, for judging whether imaging performed during radiation imaging of the mammogram was appropriate.
It was newly discovered that it is possible to employ mammary gland content rates to detect abnormal patterns. Based on this knowledge, the abnormal pattern detecting apparatus and the abnormal pattern detecting method of the present invention detect a breast region from within a mammogram, calculate mammary gland content rates for each pixel within the detected breast region, and judges whether each pixel represents an abnormal pattern using the calculated mammary gland content rates. Thereby, detection accuracy can be improved compared to conventional methods that perform detection based on pixel values, etc. In addition, abnormal patterns can be detected at higher speeds and with greater efficiency compared to methods that perform detection using filtering processes.
Note that the judging means may comprise: average value calculating means, for calculating the average value of the mammary gland content rates calculated by the mammary gland content rate calculating means; and abnormality judging means, for judging whether each of the pixels represents an abnormal pattern, by comparing the difference between the average value and the mammary gland content rates against a set reference value. In this case, abnormal patterns can be accurately detected from the mammary gland content rates.
Further, the average value calculating means may function to calculate a normal average value, which is an average value of the mammary gland content rates of a plurality of pixels judged to be normal by the abnormality judging means; and
the abnormality judging means may further judge whether the plurality of pixels which have been judged to be normal represent abnormal patterns, employing the normal average value, the mammary gland content rate, and a set reference value, which is set in advance. In this case, all abnormal pixels that constitute abnormal patterns can be detected. Therefore, the accuracy of abnormal pattern detection is improved further.

The calculation of the normal average value by the average value calculating means and the judgments by the abnormality judging means may be repeated until no pixels which are judged to represent abnormal patterns remain. In this case, all abnormal pixels that constitute abnormal patterns can be detected. Therefore, the accuracy of abnormal pattern detection is improved further.

In addition, the mammary gland content rate calculating means may obtain a pixel value $I_0$ of a region at which radiation did not pass through the breast but was directly irradiated onto a radiation detector, calculate a pixel value $A(x, y)$ for pixels $(x, y)$ at which only fat tissue has been imaged by radiation imaging, and calculate the mammary gland content rate $r(x, y)$ from pixel values $I(x, y)$ based on a ratio $\mu$ of an average attenuation coefficient between fat and mammary glands, which is stored in advance, according to Formula (1) below

$$r(x, y) = \frac{A(x, y) - I(x, y)}{I_0 - A(x, y)} \times \frac{1}{\mu - 1} \qquad \text{Formula (1).}$$

In this case, mammary gland content rates can be accurately detected from the mammogram.

Further, the average value calculating means may calculate a weighted average of the mammary gland content rate, using probabilities of presence stored in a mammary gland distribution map as weighting coefficients. In this case, the detection accuracy with respect to abnormal patterns can be improved.

The abnormal pattern detecting apparatus may further comprise image processing condition setting means, for setting image processing conditions based on detected abnormal pixels. In this case, optimal image processing conditions can be set, without being influenced by the presence of abnormal patterns.

The abnormal pattern detecting apparatus may further comprise imaging pass/fail judging means, for judging whether imaging performed during radiation imaging of the mammogram was appropriate, based on the number of pixels which have been judged as being abnormal. In this case, the probability of imaging failures can be judged simply and accurately.

BRIEF DESCRIPTION OF THE DRAWINGS

Figure 1 is a block diagram that illustrates the configuration of a preferred embodiment of an abnormal pattern detecting apparatus of the present invention.

Figure 2 is a schematic diagram that illustrates an example of a radiation imaging apparatus for obtaining mammograms.

Figure 3 is a schematic diagram that illustrates an example of a radiation image obtained by a mammography apparatus.

Figure 4 is a schematic diagram that illustrates an example of a mammary gland distribution map which is utilized when an average value is calculated by an average value calculating means of Figure 1.

Figure 5 is a graph that illustrates an example of a relationship between positions within a breast region and the pixel values of fat tissue.

Figure 6A is a graph that illustrates an example of a histogram of mammary gland content rates calculated from a mammogram in which abnormal patterns are not present.

Figure 6B is a graph that illustrates an example of a histogram of mammary gland content rates calculated from another mammogram in which abnormal patterns are not present.

Figure 7A is a graph that illustrates an example of a histogram of mammary gland content rates calculated from a mammogram in which abnormal patterns are present.

Figure 7B is a graph that illustrates an example of a histogram of mammary gland content rates calculated from another mammogram in which abnormal patterns are present.

Figure 8 is a graph that illustrates an example of mammary gland content rates for normal pixels and abnormal pixels with respect to average mammary gland content rate values within a plurality of mammograms.

Figure 9 is a flow chart that illustrates the steps of an abnormal pattern detecting method according to a preferred embodiment of the present invention.

DESCRIPTION OF THE PREFERRED EMBODIMENTS

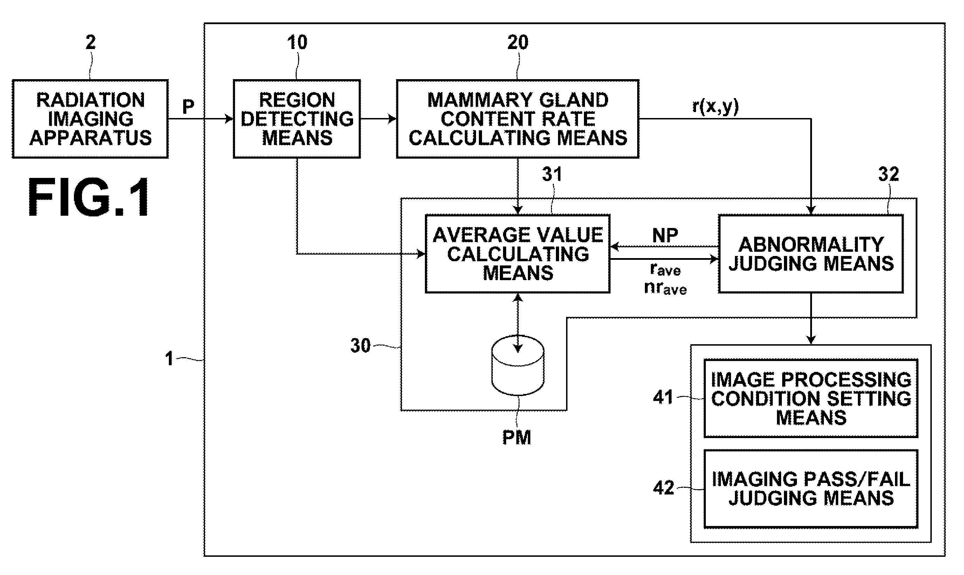

Hereinafter, embodiments of the present invention will be described with reference to the attached drawings. Figure 1 is a block diagram that illustrates the configuration of an abnormal pattern detecting apparatus 1 as an embodiment of the present invention. Note that the configuration of the abnormal pattern detecting apparatus 1 of Figure 1 is realized by executing an abnormal pattern detecting program, which is loaded into an auxiliary memory device, on a computer (a personal computer, for example). Alternatively, the abnormal pattern detecting program is recorded on information recording media such as CD-ROM's or distributed via a network such as the Internet, and installed in the computer.

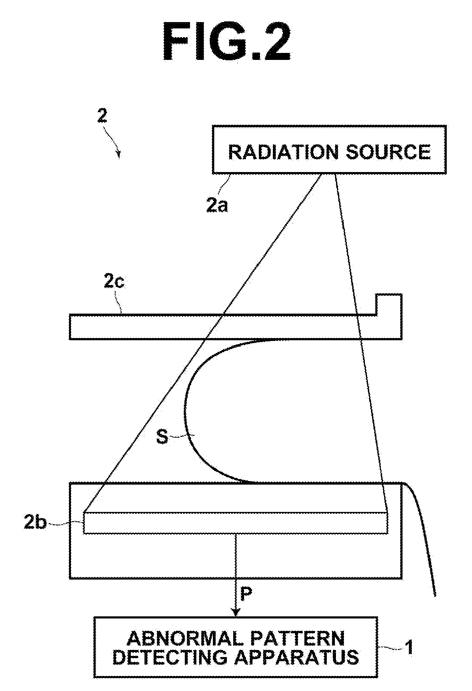

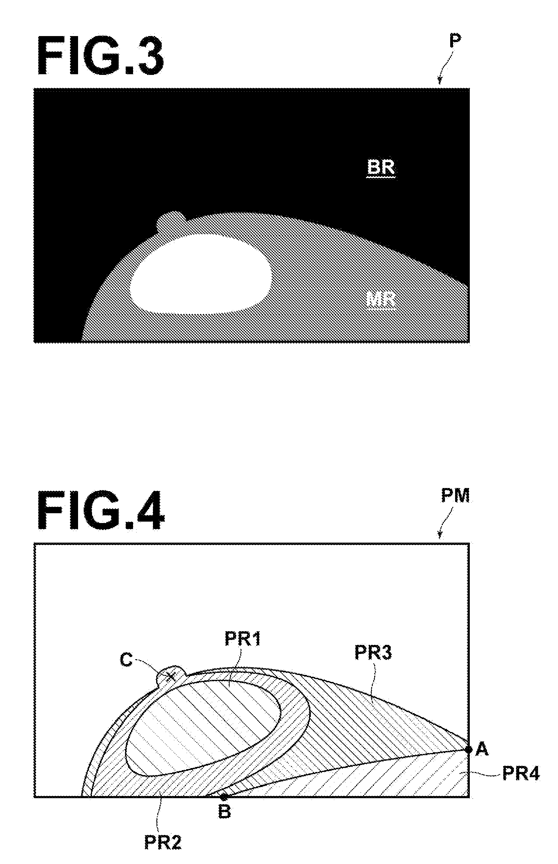

The abnormal pattern detecting apparatus 1 detects abnormal patterns from within mammograms which are obtained by a radiation imaging apparatus 2 (a mammography apparatus). Figure 2 is a schematic diagram that illustrates an example of 2 radiation imaging apparatus 2. In Figure 2, the radiation imaging apparatus 2 is equipped with a radiation source 2a and a radiation detector 2b. A breast, which is pressed by a pressing plate 2c, is positioned between the radiation source 2a and the radiation detector 2b. Radiation is emitted onto the breast from the radiation source 2a, and the radiation which passes through the breast is detected by the radiation detector 2b. As a result, a mammogram P, in which the breast is pictured, is detected, as illustrated in Figure 3.

The abnormal pattern detecting apparatus 1 of Figure 1 is equipped with: a region detecting means 10; a mammary gland content rate calculating means 20; and a judging means 30. The region detecting means 10 detects a breast region MR, in which the breast is pictured, and a blank region BR, in which radiation was directly irradiated onto the radiation detector 2, from within the mammogram P. Note that various known techniques may be employed to detect the breast region MR. Further, the region detecting means 10 also functions to detect the pectoral muscle region from within the mammogram P. For example, the region detecting means 10 utilizes the fact that the border between the pectoral muscle region and a fat region has comparatively clear edges, and perform scanning from the borderline of the breast toward the chest wall using a differential operator. Then, points having large differential values are extracted as boundary points A and B (refer to Figure 4). Thereafter, the region detecting means 10 calculates a curve that connects the extracted boundary points, and detects the side of the curve toward the chest wall (the side opposite the blank region) as a pectoral muscle region PR4.

The mammary gland content rate calculating means 20 calculates mammary gland content rates $r(x, y)$ for each pixel within the mammogram P. The mammary gland content rates $r(x, y)$ represent the weighting ratio of mammary gland tissue that occupies each pixel region. That is, the mammary gland content rate represents the rate at which mammary glands are included in the thickness direction of the breast, which is the irradiating direction of the radiation. In the case that no mammary glands are present due to a region being all fat, the mammary gland content rate $r(x, y)$ is 0. As the mammary gland density increases, the mammary gland content rate $r(x, y)$ also increases.

The mammary gland content rate calculating means 20 calculates the following Formula (1) to calculate the mammary gland content rates $r(x, y)$. Note that details regarding this calculation are described in Japanese Patent Application No. 2010-010239.

$$r(x, y) = \frac{A(x, y) - I(x, y)}{I_0 - A(x, y)} \times \frac{1}{\mu - 1} \qquad \text{Formula (1)}.$$

In Formula (1), $I_0$ is the pixel value of the blank region, $A(x, y)$ is the pixel value of pixels that represent fat, $I(x, y)$ is the pixel value of pixels for which the mammary gland content rate $r(x, y)$ is to be calculated, and $\mu$ is the ratio of an average attenuation coefficient between fat and mammary glands (average attenuation coefficient of mammary glands/average attenuation coefficient of fat). Note that a predetermined value (1.778, for example) is stored in advance as the average attenuation coefficient ratio $\mu$.

From among the above variables of Formula (1), the fat pixel value $A(x, y)$ is calculated employing the technique disclosed in Japanese Unexamined Patent Publication No. 2005-065855 or in Japanese Patent Application No. 2010-010239. That is, the pixel values obtained when fatty tissue is imaged differ corresponding to the thickness thereof. Meanwhile, it is not possible for breasts to be of a uniform thickness during imaging thereof. Breasts which are pressed have a thickness distribution such that the thickness gradually increases from the outlines thereof to a direction normal to the outlines. Accordingly, pixel values will differ for pixels that only picture fatty tissue if the positions thereof are at the vicinity of the borderline of the breast and at the vicinity of the chest wall. Therefore, the mammary gland content rate calculating means 20 calculates fat pixel values $A(x, y)$ which are estimated to be output if only fatty tissue is imaged at each position within the breast region MR.

Specifically, first, a threshold value for separating mammary glands and fat regions is calculated, from the pixel values of the pectoral muscle toward the side of the chest wall and the pixel values of fatty regions in the vicinity thereof.

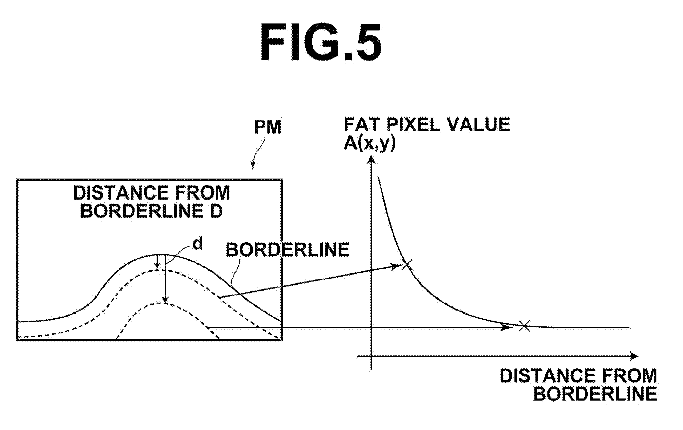

Next, the threshold value is employed to separate the mammary gland regions and the fatty regions, and a plurality of pixel values of fatty regions positioned at different distances from the borderline are sampled. Then, the relationship between distances from the borderline in the direction normal thereto and FAT PIXEL values A(x, y) is calculated by curve approximation, as illustrated in Figure 5. When the mammary gland content rate r(x, y) of each pixel (x, y) is calculated by Formula (1), the FAT PIXEL value A(x, y) corresponding to the position of the pixels (x, y).

Note that a case has been described in which the mammary gland content rate calculating means 20 calculates the mammary gland content rates r(x, y) from the mammogram. Alternatively, the mammary gland content rates r (x, y) may be calculated by the known method described in T. Amano et al., "Measurement of Glandular Dose Using Digital mammogram", Medical Imaging and Information Sciences, Vol. 24, No. 1, pp. 6-12, 2007. That is, an experimental phantom corresponding to the mammary gland content rates is imaged in advance, and a LUT (Look Up Table) that indicates the relationships among pixel values and mammary gland content rates r(x, y) is prepared. Then, the mammary gland content rate calculating means 20 may refer to the LUT to calculate the mammary gland content rates r(x, y). As a further alternative, a LUT that indicates the relationships among pixel values and mammary gland content rates r (x, y) for each of a plurality of imaging conditions (X ray tube voltage, filter type, breast thickness, etc.).

The judging means 30 of Figure 3 judges whether each pixel within the breast region MR is an abnormal pixel AP that represents an abnormal pattern or a normal pixel NP. The judging means 30 is equipped with an average value calculating means 31 and an abnormality judging means 32. The average value calculating means 31 calculates an average mammary gland content rate $r_{ave}$ of the mammary gland content rates within the breast region MR. The average value calculating means 31 has a function of calculating a weighted average, performing weighting corresponding to positions of pixels employing a mammary gland distribution map PM such as that illustrated in Figure 4. The mammary gland distribution map PM stores the probability that mammary glands are present within each position of the breast region MR. The mammary gland distribution map PM may be produced by the known technique described in Japanese Unexamined Patent Publication No. 2005-065855 or the like. For example, the probabilities of mammary glands being present are stored for a region PR1 having a high probability that mammary glands are present therein, a region PR2 having a comparatively high probability that mammary glands are present therein, a region PR3 having a low probability that mammary glands are present therein, and the pectoral muscle region PR4. Note that when the average mammary gland content rate $r_{ave}$ is calculated, it is preferable for pixels within the pectoral muscle region PR4 are excluded from the calculations (probability of mammary gland presence = 0).

The abnormality judging means 32 judges whether each of the pixels represents an abnormal pattern, employing the average value $r_{ave}$ calculated by the average value calculating means 31, the mammary gland content rate r (x, y) for each pixel, and a set reference value $R_{ref}$, which is set in advance. Specifically, the abnormality judging means 32 judges pixels in which the difference between the mammary gland content rate r (x, y) and the average value rave is greater than the set reference value $R_{ref}$ ( | r (x, y) $-r_{ave}$ | $>R_{ref}$) as abnormal pixels, and judges pixels in which the difference between the mammary gland content rate r (x, y) and the average value $r_{ave}$ is less than or equal to the set reference value $R_{ref}$ ( | r (x, y) $-r_{ave}$ | $\leq R_{ref}$) as normal pixels.

Note that a case has been described in which differences are calculated for each pixel (x, y). Alternatively, the mammary gland content rates r(x, y) may be compared against a sum of the set reference value $R_{ref}$ and the average value $r_{ave}$ (r (x, y) $>R_{ref}+R_{ave}$) to perform judgments regarding whether each pixel is abnormal.

Abnormal patterns can be detected based on the mammary gland content rates r(x, y) as described above for the following reasons. First, abnormal tissues have pixel values I (x, y) which are clearly smaller than those of normal tissue, and appear white. Accordingly, the mammary gland content rate r(x, y) will become greater as I(x, y) becomes smaller as indicated in Formula (1). As a result, abnormal patterns will have large mammary gland content rate values r(x, y).

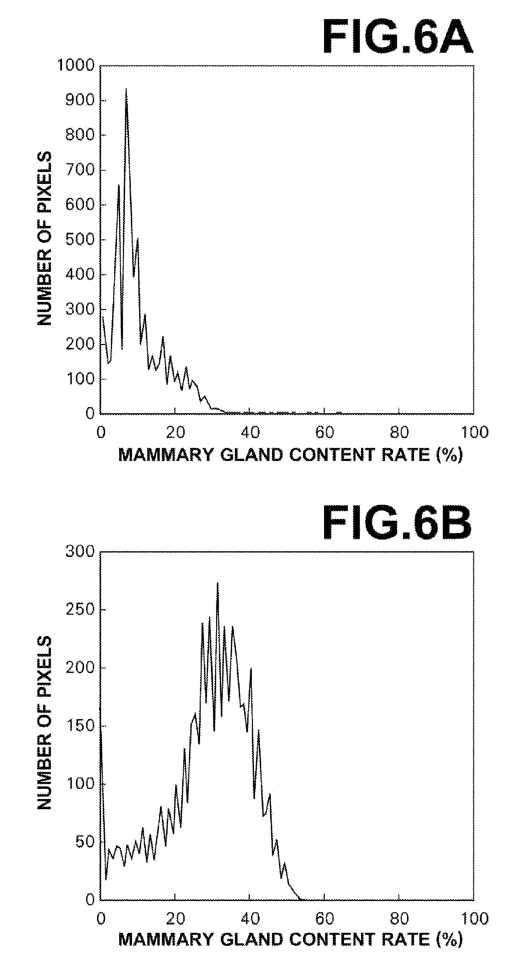

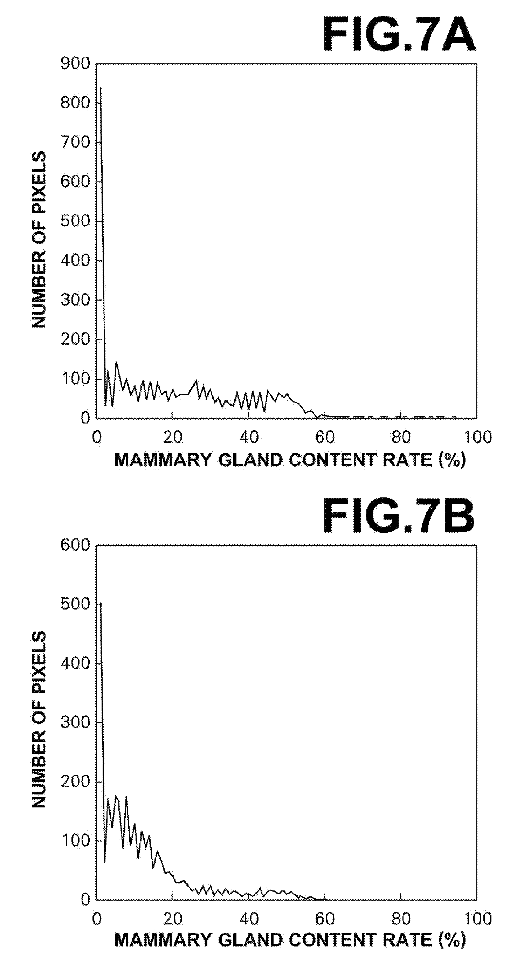

Figures 6A and 6B are graphs that illustrate examples of histograms of mammary gland content rates r(x, y) calculated from mammograms in which abnormal patterns are not present. Figures 7A and 7B are graphs that illustrate examples of histograms of mammary gland content rates r(x, y) calculated from mammograms in which abnormal patterns are present. As is clear from Figures 6A through 7B, the hems of the histograms are longer in the mammograms in which abnormal regions are present. Accordingly, the pixels that constitute the hems of the histograms of Figures 7A and 7B may be judged to be abnormal pixels that represent abnormal patterns.

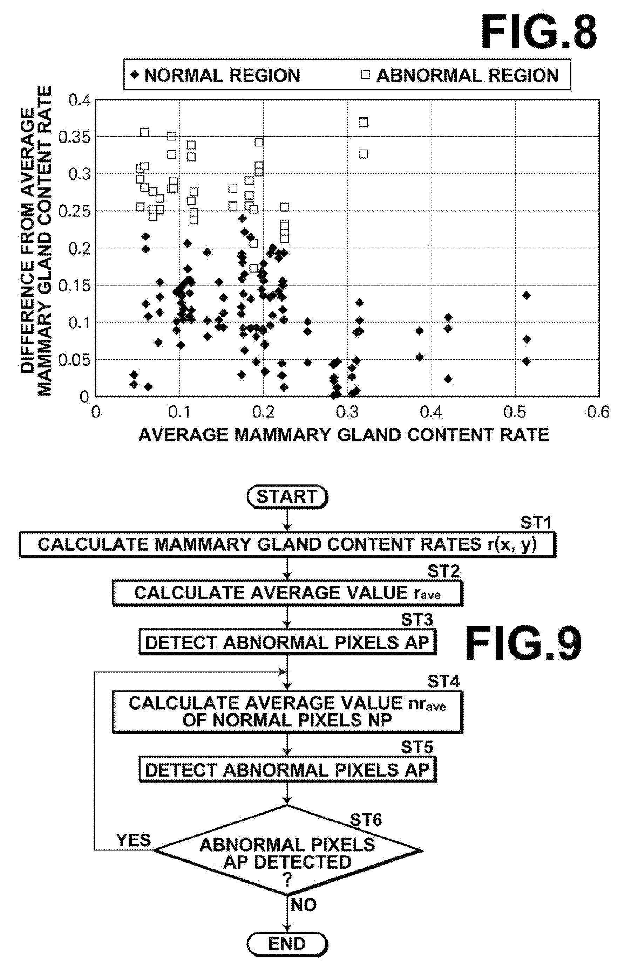

Meanwhile, Figure 8 is a graph in which the relationships among differences with respect to average mammary gland content rate values is plotted using a plurality of mammograms P (for example, 57 mammograms). In Figure 8, the horizontal axis represents average mammary gland content rates $r_{ave}$, and the vertical axis represents differences ( | r (x, y) $-r_{ave}$ | ) between mammary gland content rate r (x, y) and the average values $r_{ave}$. In addition, the judgments regarding normal regions and abnormal regions were performed by a physician.

It can be seen that normal regions and abnormal regions can be separated by employing the predetermined threshold value $R_{ref}$ with respect to the mammary gland content rates r(x, y), regardless of individual differences (mainly the amount of mammary glands) among breasts pictured in a plurality of mammograms P. Therefore, the judging means 30 utilizes the predetermined threshold value $R_{ref}$ (0.25, for example) to judge whether pixels represent abnormal patterns.

By detecting abnormal patterns based on the mammary gland content rates r(x, y) in this manner, abnormal patterns can be detected at higher speeds and with greater efficiency compared to conventional methods that perform detection using iris filters and the like.

Further, the judging means 30 functions to repeatedly perform judgments regarding whether pixels represent abnormal patterns. Specifically, the average value calculating means 31 calculates normal average values $nr_{ave}$ by calculating averages of mammary gland content rates r(x, y) of pixels which have been judged to be not abnormal by the abnormality judging means 32. Then, the abnormal i ty judging means 32 judges whether normal pixels NP include any abnormal pixels AP, employing the normal average value $nr_{ave}$, the mammary gland content rates r (x, y) of the normal pixels NP, and the set reference value. The judging means 30 may be configured to repeat judgments a predetermined number of times (twice, for example). Alternatively, the abnormality judging means 32 may repeat judgments until no pixels which are judged to represent abnormal patterns remain. By adopting this configuration, the judgment accuracy of the judging means 30 can be improved. Note that a single value (0.25, for example) may be employed as the set reference value $R_{ref}$ during the repeated judgments, or different values may be employed.

The detection results of the abnormal patterns can be employed in various subsequent processes. For example, the abnormal pattern detecting apparatus 1 may be equipped with an image processing condition setting means 41, for setting image processing parameters with respect to normal pixel regions of the mammogram P, from which the detected abnormal patterns have been removed. For example, calculation of mammary gland pixel values and mammary gland contrast values may be performed only with respect to the normal pixels, to set gradation processing parameters. Alternatively, the image processing condition setting means 41 may set image processing conditions separately for abnormal pixels and normal pixels.

Further, the abnormal pattern detecting apparatus 1 may be equipped with an imaging pass/fail judging means 42, for judging positioning failures (extremely insufficient pressing of breasts, insufficient development of mammary glands, etc.). For example, the imaging pass/fail judging means 42 calculates an index value = number of pixels judged to be abnormal/number of pixels within the breast region. In the case that the index value is 0.2 or greater, that is, in the case that 20% or more of the pixels are judged to represent abnormal patterns, the imaging pass/fail judging means 42 may display a warning that a positioning error may have occurred on the monitor of a terminal.

Figure 9 is a flow chart that illustrates the steps of an abnormal pattern detecting method according to a preferred embodiment of the present invention. The abnormal pattern detecting method will be described with reference to Figure 9. First, mammary gland content rates r(x, y) are calculated for each pixel, based on a mammogram P obtained by the radiation imaging apparatus 2 (step ST1). Then, the average value calculating means 31 calculates an average value $r_{ave}$ of the mammary gland content rates r (x, y) within a breast region MR (step ST2). Then, the abnormality judging means 32 detects normal pixels NP and abnormal pixels AP using the mammary gland content rates r(x, y), the average value $r_{ave}$, and the set reference value $R_{ref}$ (step ST3). Further, a normal average value $nr_{ave}$ of the mammary gland content rates of normal pixels NP is calculated (step ST4). Then, the normal pixels NP are judged regarding whether they are normal pixels NP or abnormal pixels AP (step ST5). The normal average value $nr_{ave}$ is calculated and the normal pixels NP are judged regarding whether they are normal pixels NP or abnormal pixels AP repeatedly until no more abnormal pixels AP are detected (step ST4 through step ST6).

It was newly discovered that it is possible to employ mammary gland content rates to detect abnormal patterns. Based on this knowledge, the embodiment described above detects the breast region MR from within the mammogram P obtained by the radiation imaging apparatus 2, calculates the mammary gland content rates r (x, y) for each pixel within the detected breast region MR, and performs judgment regarding whether each pixel represents an abnormal pattern using the calculated mammary gland content rates r(x, y). Thereby, detection accuracy can be improved compared to conventional methods that perform detection based on pixel values, etc. In addition, abnormal patterns can be detected at higher speeds and with greater efficiency compared to methods that perform detection using filtering processes.

Note that the judging means 30 comprises: the average value calculating means 31, for calculating the average value $r_{ave}$ of the mammary gland content rates r (x, y) calculated by the mammary gland content rate calculating means 20; and the abnormality judging means 32, for judging whether each of the pixels represents an abnormal pattern, by comparing the difference between the average value $r_{ave}$ and the mammary gland content rates r (x, y) against the set reference value $R_{ref}$. Therefore, abnormal patterns can be accurately detected from the mammary gland content rates r(x, y).

Further, the average value calculating means 31 functions to calculate a normal average value $nr_{ave}$, which is the average value of the mammary gland content rates r (x, y) of a plurality of pixels NP judged to be normal by the abnormality judging means 32; and the abnormality judging means 32 further judges whether the plurality of pixels NP which have been judged to be normal represent abnormal patterns, employing the normal average value $nr_{ave}$, the mammary gland content rates r (x, y), and the set reference value $R_{ref}$. Therefore, all abnormal pixels AP that constitute abnormal patterns can be detected. Accordingly, the accuracy of abnormal pattern detection is improved further.

The calculation of the normal average value $nr_{ave}$ by the average value calculating means 31 and the judgments by the abnormality judging means 32 may be repeated until no pixels which are judged to represent abnormal patterns remain. In this case, all abnormal pixels AP that constitute abnormal patterns can be detected. Therefore, the accuracy of abnormal pattern detection is improved further.

In addition, the mammary gland content rate calculating means obtains a pixel value $I_0$ of a region at which radiation did not pass through the breast but was directly irradiated onto a radiation detector, calculates a pixel value A (x, y) for pixels (x, y) at which only fat tissue has been imaged by radiation imaging, and calculates the mammary gland content rate r(x, y) from pixel values I(x, y) based on a ratio $\mu$ of an average attenuation coefficient between fat and mammary glands, which is stored in advance, according to Formula (1) below

$$r(x, y) = \frac{A(x, y) - I(x, y)}{I_0 - A(x, y)} \times \frac{1}{\mu - 1} \qquad \text{Formula (1)}.$$

Therefore, mammary gland content rates can be accurately detected from the mammogram.

Further, the average value calculating means 31 calculates a weighted average of the mammary gland content rate, using probabilities of presence stored in the mammary gland distribution map PM as weighting coefficients. Therefore, the detection accuracy with respect to abnormal patterns can be improved.

The present invention is not limited to the embodiments described above. For example, the judging means 30 of Figure 1 is described as that which performs judgments regarding whether pixels represent abnormal patterns using the average value of mammary gland content rates. Alternatively, judgments may be performed based on distances from peak values within histograms, dispersion, or cumulative histograms, because the shapes of histograms clearly differ in cases that abnormal patterns are present and cases that abnormal patterns are not present, as illustrated in Figures 6A through 7B.

**Claims**

1. An abnormal pattern detecting apparatus (1), for detecting abnormal patterns from within a mammogram obtained by radiation imaging performed by a radiation imaging apparatus (2), **characterized by** comprising:

   region detecting means (10), for detecting a breast region from within the mammogram;
   mammary gland content rate calculating means (20), for calculating a mammary gland content rate for each pixel of the breast region detected by the region detecting means (10); and
   judging means (30), for judging whether each of the pixels represents an abnormal pattern, using the mammary gland content rates calculated by the mammary gland content rate calculating means.

2. An abnormal pattern detecting apparatus as defined in Claim 1, **characterized by** the judging means (30) comprising:

   average value calculating means (31), for calculating the average value of the mammary gland content rates calculated by the mammary gland content rate calculating means; and
   abnormality judging means (32), for judging whether each of the pixels represents an abnormal pattern, employing the average value calculated by the average value calculating means (31), the mammary gland content rate, and a set reference value, which is set in advance.

3. An abnormal pattern detecting apparatus as defined in Claim 2, wherein:

   the abnormality judging means (32) judges pixels in which the difference between the mammary gland content rate and the average value is greater than the set reference value as abnormal pixels.

4. An abnormal pattern detecting apparatus as defined in one of Claim 2 and Claim 3, wherein:

   the average value calculating means (31) functions to calculate a normal average value, which is an average value of the mammary gland content rates of a plurality of pixels judged to be normal by the abnormality judging means; and
   the abnormality judging means (32) further judges whether the plurality of pixels which have been judged to be normal represent abnormal patterns, employing the normal average value, the mammary gland content rate, and a set reference value, which is set in advance.

5. An abnormal pattern detecting apparatus as defined in Claim 4, wherein:

the calculation of the normal average value by the average value calculating means (31) and the judgments by the abnormality judging means (32) are repeated until no pixels which are judged to represent abnormal patterns remain.

6. An abnormal pattern detecting apparatus as defined in any of Claim 2 through Claim 5, wherein:

the average value calculating means (31) calculates a weighted average of the mammary gland content rate, using probabilities of presence stored in a mammary gland distribution map as weighting coefficients.

7. An abnormal pattern detecting apparatus as defined in any one of Claim 1 through Claim 6, wherein:

the mammary gland content rate calculating means (20) obtains a pixel value $I_0$ of a region at which radiation did not pass through the breast but was directly irradiated onto a radiation detector, calculates a pixel value A (x, y) for pixels (x, y) at which only fat tissue has been imaged by radiation imaging, and calculates the mammary gland content rate r (x, y) from pixel values I (x, y) based on a ratio $\mu$ of an average attenuation coefficient between fat and mammary glands, which is stored in advance, according to Formula (1) below

$$r(x, y) = \frac{A(x, y) - I(x, y)}{I_0 - A(x, y)} \times \frac{1}{\mu - 1} \qquad \text{Formula (1).}$$

8. An abnormal pattern detecting apparatus as defined in any one of Claim 1 through Claim 7, further comprising:

processing condition setting means (41), for setting image processing conditions based on a region from which pixels which have been judged to be abnormal have been excluded.

9. An abnormal pattern detecting apparatus as defined in any one of Claim 1 through Claim 8, further comprising:

imaging pass/fail judging means (42), for judging whether imaging performed during radiation imaging of the mammogram was appropriate, based on the number of pixels which have been judged to be abnormal.

10. An abnormal pattern detecting method, for detecting abnormal patterns from within a mammogram obtained by radiation imaging performed by a radiation imaging apparatus (2), **characterized by** comprising:

detecting a breast region from within the mammogram;
calculating a mammary gland content rate for each pixel of the detected breast region; and
judging whether each of the pixels represents an abnormal pattern, using the calculated mammary gland content rates.

11. A recording medium having an abnormal pattern detecting program for detecting abnormal patterns from within a mammogram obtained by radiation imaging performed by a radiation imaging apparatus stored therein, the program **characterized by** causing a computer to execute the procedures of:

detecting a breast region from within the mammogram;
calculating a mammary gland content rate for each pixel of the detected breast region; and
judging whether each of the pixels represents an abnormal pattern, using the calculated mammary gland content rates.

**FIG.1**

RADIATION IMAGING APPARATUS — 2

REGION DETECTING MEANS — 10

MAMMARY GLAND CONTENT RATE CALCULATING MEANS — 20

$r(x,y)$

AVERAGE VALUE CALCULATING MEANS — 31

ABNORMALITY JUDGING MEANS — 32

NP

$r_{ave}$
$nr_{ave}$

30

PM

IMAGE PROCESSING CONDITION SETTING MEANS — 41

IMAGING PASS/FAIL JUDGING MEANS — 42

P

1

EP 2 366 332 A1

# FIG.2

2

RADIATION SOURCE

2a

2c

S

2b

P

ABNORMAL PATTERN
DETECTING APPARATUS

1

# FIG.3

P

BR

MR

# FIG.4

PM

PR1

C

PR3

A

PR4

B

PR2

# FIG.5

# FIG.6A

# FIG.6B

# FIG.7A

# FIG.7B

# FIG.8

◆ NORMAL REGION      □ ABNORMAL REGION

DIFFERENCE FROM AVERAGE MAMMARY GLAND CONTENT RATE (y-axis)

AVERAGE MAMMARY GLAND CONTENT RATE (x-axis)

# FIG.9

START

CALCULATE MAMMARY GLAND CONTENT RATES r(x, y)   ST1

CALCULATE AVERAGE VALUE $r_{ave}$   ST2

DETECT ABNORMAL PIXELS AP   ST3

CALCULATE AVERAGE VALUE $nr_{ave}$ OF NORMAL PIXELS NP   ST4

DETECT ABNORMAL PIXELS AP   ST5

ABNORMAL PIXELS AP DETECTED ?   ST6

YES

NO

END

Europäisches
Patentamt

European
Patent Office

Office européen
des brevets

# EUROPEAN SEARCH REPORT

Application Number

EP 11 15 7647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SACHIKO GOTO: "Measurement of Breast Density on Digital Mammograms", INSTRUMENTATION AND MEASUREMENT TECHNOLOGY CONFERENCE, 2006. IMTC 2006. PROCEEDINGS OF THE IEEE; 24 APRIL 2006 - 27 APRIL 2006, PISCATAWAY, NJ, USA,IEEE, 1 January 2006 (2006-01-01), pages 432-437, XP031016929, DOI: DOI:10.1109/IMTC.2006.237100 ISBN: 978-0-7803-9360-8 | 1-3,6-11 | INV. A61B6/00 G06T7/00 |
| A | * the whole document * | 4,5 | |
| X | DIETER ROLLER ET AL: "A Method for Interpreting Pixel Grey Levels in Digital Mammography", 1 January 2006 (2006-01-01), IMAGE ANALYSIS AND RECOGNITION LECTURE NOTES IN COMPUTER SCIENCE;;LNCS, SPRINGER, BERLIN, DE, PAGE(S) 580 - 588, XP019043817, ISBN: 978-3-540-44894-5 | 1-3,6-11 | |
| A | * the whole document * | 4,5 | TECHNICAL FIELDS SEARCHED (IPC) |
| A,P | EP 2 238 905 A1 (FUJIFILM CORP [JP]) 13 October 2010 (2010-10-13) * the whole document * | 1-11 | A61B G06T |
| A,D | TAKASHI AMANO ET AL: "Measurement of glandular dose using digital mammogram", MEDICAL IMAGING AND INFORMATION SCIENCES,, vol. 24, 1 January 2007 (2007-01-01), pages 6-12, XP009135832, * the whole document * | 7 | |

The present search report has been drawn up for all claims

| Place of search | Date of completion of the search | Examiner |
|---|---|---|
| Munich | 8 July 2011 | Mundakapadam, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 15 7647

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2011

| Patent document cited in search report | | Publication date | Patent family member(s) | | Publication date |
|---|---|---|---|---|---|
| EP 2238905 | A1 | 13-10-2010 | CN | 101849836 A | 06-10-2010 |
| | | | JP | 2010253245 A | 11-11-2010 |
| | | | US | 2010246924 A1 | 30-09-2010 |

For more details about this annex : see Official Journal of the European Patent Office, No. 12/82

# EP 2 366 332 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005065855 A
- JP 2001238868 A
- JP 2010010239 A

### Non-patent literature cited in the description

- **T. AMANO et al.** Measurement of Glandular Dose Using Digital Mammogram. *Medical Imaging and Information Sciences,* 2007, vol. 24 (1), 6-12
- **T. AMANO et al.** Measurement of Glandular Dose Using Digital mammogram. *Medical Imaging and Information Sciences,* 2007, vol. 24 (1), 6-12